# EUROPEAN PATENT APPLICATION

(11) **EP 2 200 214 A1**
(43) Date of publication of application: **23.06.2010**
(21) Application number: 08291174.4
(22) Date of filing: 12.12.2008
(51) Int. Cl.: H04L 5/00, H04L 5/04

(54) **Method for simultaneously transferring two data signals, optical access network, and central station**

(71) Applicant: Alcatel Lucent, 75008 Paris (FR)
(72) Inventor: Jentsch, Lothar, 15370 Fredersdorf (DE); Krimmel, Heinz Georg, 70825 Korntal-Münchingen (DE)
(74) Representative: Brose, Gerhard

(57) **Abstract**

The invention relates to a method for simultaneously transferring a first data signal (S1) with a first data rate and a second data signal (S2) with a second data rate, where the first data rate is lower than the second data rate, in which before transferring the first data signal (S1), this is predistorted (S1s) in such a manner that after band restriction according to the bandwidth of the first data signal (S1) the intersymbol interference between the two data signals (S1, S2) is reduced, to an optical access network, and to a central station therefore.

## Description

The invention relates to a method for simultaneously transferring a first data signal with a first data rate and a second data signal with a second data rate according to the preamble of claim 1, to an optical access network with a central station, an optical distribution network, and a plurality of subscriber stations according to the preamble of claim 4, and to a central station for an optical access network according to the preamble of claim 5.

Download capacity requirements in optical access networks continuously increase. While increasing, time goes on and the technical possibilities improve. Meanwhile it is possible to work with higher data rates, mostly with lower amplitudes due to forward error correction capabilities.

To further increase such download capacity it is known to superpose such new data signal to the already existing one. This leads to two data signals with a lower data rate and higher amplitude on the one hand and a higher data rate, and lower amplitude on the other hand. An example of such a network is known from EP 1 986 355 A1 (internal docket: 801103).

Under a constraint pass band width, as it is given in the optical receivers for the lower data rate, the time instants when the band restricted signal crosses the horizontal symmetry line in an eye pattern are no more determined by the lower data rate waveform alone, nor are on an equidistant scale. Zero crossings are additionally affected by the content of the higher data rate signal. Such mutual influence is known as intersymbol interference.

Clock recovery in receivers of only the lower data rate is thus influenced by jitter, leading to a degradation of the receiver sensitivity.

According to the invention this problem is solved by a method according to the teachings of claim 1, an optical access network according to the teachings of claim 4, and a central station according to the teachings of claim 5.

The invention started from an embodiment, where the second data rate is four times the first data rate, and the amplitude of the first data signal is in the range of three to five times the amplitude of the second data signal.

Where in such embodiment signal transition's edges of the same kind (falling or rising edges) coincide in both signals, the signal transition (edge) of the signal with the lower data rate is shifted at the sending side in order to reduce the signal jitter after low pass filtering.

In general, before transferring the first data signal, this is predistorted in such a manner that after band restriction according to the bandwidth of the first data signal the intersymbol interference between the two data signals is reduced.

Further embodiments of the invention are to be found in the subclaims and in the accompanying description.

In the following the invention will be described based on the above mentioned embodiment with the aid of the accompanying drawing, in which:
- Figure 1: shows an optical access network according to the invention with a central station according to the invention apt to carry out the method according to the invention.
- Figure 2: shows a diagram with data signals used in a method according to the invention. At least the amplitudes are not drawn to scale.

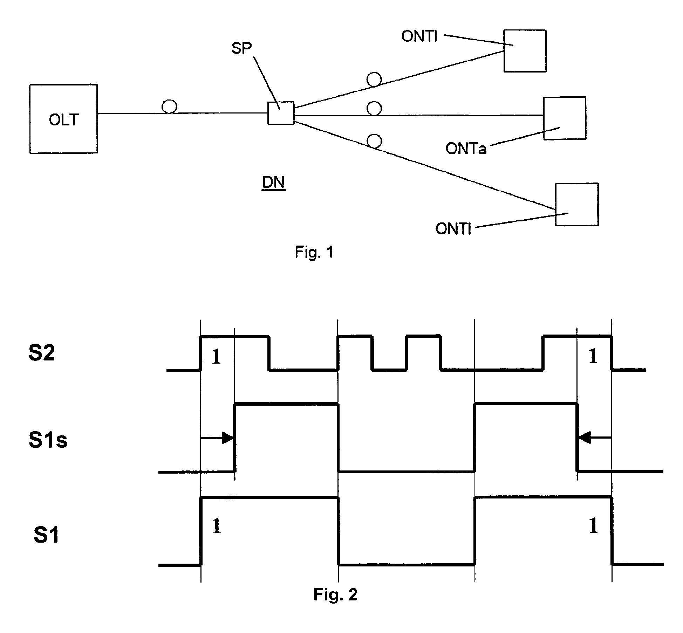

At the left of figure 1 we have a central station, in networks of this kind mostly called optical line termination OLT. This central station is the interface to the worldwide telecommunications network. At the right we see here three commonly called optical network terminations, building the transfer point to the end user equipment, commonly known as terminal equipment. In between we have a passive, here tree-shaped, distributing network DN.

This distributing network DN shows one single splitting point SP representative for a whole couple of splitting points. In general such distributing network includes not only one splitting point, where the downstream signal path branches, but has lots of such branching points, like a tree has more than one branches and twigs. The number of subscribers can, in principle, reach up to thousands. This means, that the network has to branch to this number of twigs.

With rising number of subscribers in such network the amount of data to be transmitted there also rises. But not only by this, but also by rising demands of the single subscribers. At least those subscribers then are to be provided with a data stream of higher density, that is a higher bit rate.

Such subscribers then are supplied with advanced optical network terminating units ONTa. The others are using conventional or, as they often are called, legacy optical network terminating units ONT1.

As the uplink direction does not influence other optical network terminating units, we need here only to consider the receivers of such units. We call them legacy receivers, and advanced receivers in the following.

From the above mentioned document EP 1 986 355 A1 there is known some kind of multiplex of signals with signals for legacy and for advanced receivers being transmitted combined on the same wavelength and using the same physical paths. In order to keep the synchronization in the legacy receivers, their signals must not be interrupted during the sending of signals for the advanced receivers, but run continuously. The amplitudes of both, the signals for the advanced receivers and the signals for the legacy receivers, are chosen such that the signals for the advanced receivers do not block the legacy receivers in the receipt of the signals intended for them, as far as, at least, synchronization is concerned.

A specific problem influencing the correct synchronization of the legacy receivers in the legacy optical network terminating units ONT1 is based on the fact, that on coincidence of edges of the same kind (falling or rising) in both data signals, the common slope is steeper than a single one. Due to band restrictions in the legacy receivers such steeper slopes are influenced such that those slopes do not cross the zero line at the correct point in time. This is equivalent to a time shift of the signal.

In order not to be influenced by noise more than inevitable, receivers are commonly band restricted to a frequency band closely related to the data rate they are foreseen to operate for.

Such shift according to the invention is reduced by a predistortion of such disturbing edge of the first data signal, that is the signal with the lower data rate.

This is shown in figure 2. This figure shows in a first line a signal S2, and in a third line a signal S1. These signals are of the kind considered, where a first data signal S1 shows a first data rate and a second data signal S2 shows a second data rate, where the first data rate is lower than the second data rate. Between these two lines there is a second line showing a signal S1s with edges shifted according to the invention.

In this example, as already mentioned, the second data rate is four times the first data rate and the amplitude of the signal S1 is four times the amplitude of the signal S2; this is not drawn to scale.

With the conditions mentioned above a shift of one bit of the signal S2 with the higher data rate is convenient to conserve the alignment of transitions from the first data signal S1, and the second data signal S2. When both signals rise coincidentally a delay of one bit of the edge of signal S1 showed to best overcome such disturbing effect. When both signals fall coincidentally an antedating of one bit of the edge of signal S1 showed to best overcome such disturbing effect. As shifting is easiest to achieve by means of a clock (rather than by using delay lines), in this example the clock of signal S2 can be used to perform the shifts in signal S1. In upgrading such networks mostly the higher data rate is a whole multiple of the lower one, normally an integer power of two. Then synchronizing both signals is usual.

In practice shiftings within a signal are performed by replacing a concerned bit pattern of the signal by an other one.

In order to adapt to other conditions, especially to perform a more general predistortion, simple tests may help. And it is recommended to adapt both, the shift, and the ratio of the amplitudes.

Given the above method of operating it is obvious to the man skilled in the art, how to adapt the network and the central station.

## Claims

1. Method for simultaneously transferring a first data signal (S1) with a first data rate and a second data signal (S2) with a second data rate over a common medium, where the first data rate is lower than the second data rate, **characterized in, that** before transferring the first data signal (S1), this is predistorted (S1s) in such a manner that after band restriction according to the bandwidth of the first data signal (S1) the intersymbol interference between the two data signals (S1, S2) is reduced.

2. Method according to claim 1, **characterized in, that** the amplitude of the first data signal is higher than the amplitude of the second data signal.

3. Method according to claim 1, where the second data rate is four times the first data rate, and the amplitude of the first data signal (S1) is in the range of three to five times the amplitude of the second data signal (S2), **characterized in, that** on coincidence of edges of the same kind (falling or rising) in both data signals (S1, S2), the edge of the first data signal is shifted (S1s) at the sending side (OLT).

4. Optical access network with a central station (OLT), an optical distribution network (DN), and a plurality of subscriber stations (ONT1, ONTa), in which a first data signal (S1) with a first data rate is transferred to the subscriber stations simultaneously with a second data signal (S2) with a second data rate over a common medium, where the first data rate is lower than the second data rate, **characterized in, that** the central station (OLT) is built such that before transferring the first data signal (S1), this is predistorted (S1s) in such a manner that after band restriction according to the bandwidth of the first data signal (S1) the intersymbol interference between the two data signals (S1, S2) is reduced.

5. Central station (OLT) for an optical access network with a central station (OLT), an optical distribution network (DN), and a plurality of subscriber stations (ONT1, ONTa), in which a first data signal (S1) with a first data rate is transferred to the subscriber stations (ONT1, ONTa) simultaneously with a second data signal (S2) with a second data rate over a common medium, where the first data rate is lower than the second data rate, **characterized in, that** the central station (OLT) is built such that before transferring the first data signal (S1), this is predistorted (S1s) in such a manner that after band restriction according to the bandwidth of the first data signal (S1) the intersymbol interference between the two data signals (S1, S2) is reduced.

## Amended claims

### Amended claims in accordance with Rule 137(2) EPC.

**1.** Method for simultaneously transferring a first data signal (S1) with a first data rate and a second data signal (S2) with a second data rate over a common medium, where the first data rate is lower than the second data rate, **characterized in, that** before transferring the first data signal (S1), this is distorted (S1s) in such a manner that after band restriction according to the bandwidth of the first data signal (S1) the intersymbol interference between the two data signals (S1, S2) is reduced.

**4.** Optical access network with a central station (OLT), an optical distribution network (DN), and a plurality of subscriber stations (ONT1, ONTa), in which a first data signal (S1) with a first data rate is transferred to the subscriber stations simultaneously with a second data signal (S2) with a second data rate over a common medium, where the first data rate is lower than the second data rate, **characterized in, that** the central station (OLT) is built such that before transferring the first data signal (S1), this is distorted (S1s) in such a manner that after band restriction according to the bandwidth of the first data signal (S1) the intersymbol interference between the two data signals (S1, S2) is reduced.

**5.** Central station (OLT) for an optical access network with a central station (OLT), an optical distribution network (DN), and a plurality of subscriber stations (ONT1, ONTa), in which a first data signal (S1) with a first data rate is transferred to the subscriber stations (ONT1, ONTa) simultaneously with a second data signal (S2) with a second data rate over a common medium, where the first data rate is lower than the second data rate, **characterized in, that** the central station (OLT) is built such that before transferring the first data signal (S1), this is distorted (S1s) in such a manner that after band restriction according to the bandwidth of the first data signal (S1) the intersymbol interference between the two data signals (S1, S2) is reduced.
